(19) Europäisches Patentamt
European Patent Office
Office européen des brevets

(11) EP 4 570 887 A1

(12) **EUROPEAN PATENT APPLICATION**
published in accordance with Art. 153(4) EPC

(43) Date of publication:
**18.06.2025 Bulletin 2025/25**

(21) Application number: **23860420.1**

(22) Date of filing: **30.08.2023**

(51) International Patent Classification (IPC):
***C10M 145/14*** *(2006.01)* ***C09K 5/04*** *(2006.01)*
***C10N 30/00*** *(2006.01)* ***C10N 40/30*** *(2006.01)*

(52) Cooperative Patent Classification (CPC):
**C09K 5/04; C10M 145/14**

(86) International application number:
**PCT/JP2023/031557**

(87) International publication number:
**WO 2024/048658 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022138272**

(71) Applicant: **ENEOS Corporation**
**Chiyoda-ku**
**Tokyo 100-8162 (JP)**

(72) Inventors:
- **KAWAGUCHI, Masaki**
  **Tokyo 100-8162 (JP)**
- **SHINGYOUCHI, Hajime**
  **Tokyo 100-8162 (JP)**
- **ONUMATA, Yasushi**
  **Tokyo 100-8162 (JP)**
- **MIZUTANI, Yuya**
  **Tokyo 100-8162 (JP)**
- **OGATA, Hidetoshi**
  **Tokyo 100-8162 (JP)**
- **SEKI, Yuma**
  **Tokyo 100-8162 (JP)**

(74) Representative: **Grünecker Patent- und Rechtsanwälte**
**PartG mbB**
**Leopoldstraße 4**
**80802 München (DE)**

# (54) REFRIGERATING MACHINE OIL, WORKING FLUID COMPOSITION, AND REFRIGERANT DISSOLUTION VISCOSITY MODIFIER

(57) A refrigerating machine oil containing: a base oil; and a polymer comprising a structural unit represented by the following formula (1):

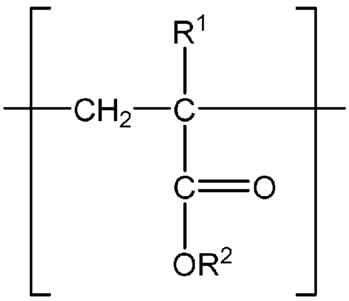

(1)

wherein $R^1$ represents a hydrogen atom or a methyl group, and $R^2$ represents an alkyl group or a group in which part of an alkyl group is substituted, wherein the group represented by $R^2$ in the polymer has an average number of carbon atoms of 4 to 18.

EP 4 570 887 A1

## Description

### Technical Field

The present invention relates to a refrigerating machine oil, a working fluid composition, and a refrigerant dissolution viscosity improver.

### Background Art

Refrigerating machines such as refrigerators, car air conditioners, room air conditioners, and vending machines are equipped with compressors for circulating refrigerants within the refrigeration cycle. These compressors are filled with refrigerating machine oil to lubricate sliding members. Various properties are required for refrigerating machine oil, and suitable base oils and additives are selected according to these properties. For example, Patent Literature 1 discloses a refrigerating machine oil containing a base oil and a specific polymer in an amount of 40% by mass or less based on the total amount of the refrigerating machine oil, which exhibits excellent lubricity (particularly antiwear properties) and oil return properties.

### Citation List

### Patent Literature

Patent Literature 1: International Publication No. WO 2017/179687

### Summary of Invention

### Technical Problem

According to the studies by the present inventors, there is room for further improvement in properties other than lubricity (particularly antiwear property) and oil return property of the refrigerating machine oil described in Patent Literature 1.
One aspect of the present invention aims to improve viscosity index of a refrigerating machine oil.

### Solution to Problem

The present inventors have found that viscosity index of a refrigerating machine oil can be improved by adding a specific (meth)acrylate-based polymer.
The present invention includes the following aspects:

[1] A refrigerating machine oil containing: a base oil; and a polymer containing a structural unit represented by the following formula (1):

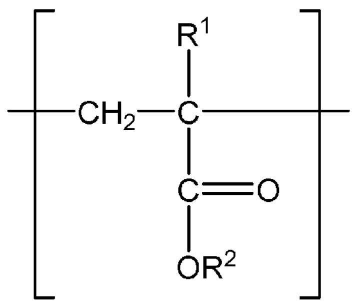

(1)

wherein $R^1$ represents a hydrogen atom or a methyl group, and $R^2$ represents an alkyl group or a group in which part of an alkyl group is substituted, wherein the group represented by $R^2$ in the polymer has an average number of carbon atoms of 4 to 18.
[2] The refrigerating machine oil according to [1], being used with a refrigerant containing a hydrocarbon.
[3] A working fluid composition containing the refrigerating machine oil according to [1]; and a refrigerant.
[4] The working fluid composition according to [3], wherein the refrigerant contains a hydrocarbon.

[5] A refrigerant dissolution viscosity improver for a working fluid composition containing a refrigerating machine oil and a refrigerant, the refrigerant dissolution viscosity improver containing a polymer containing a structural unit represented by the following formula (1):

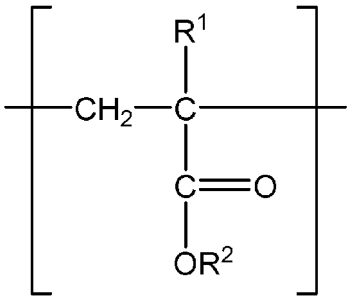

(1)

wherein $R^1$ represents a hydrogen atom or a methyl group, and $R^2$ represents an alkyl group or a group in which part of an alkyl group is substituted, wherein the group represented by $R^2$ in the polymer has an average number of carbon atoms of 4 to 18.

[6] The refrigerant dissolution viscosity improver according to [5], wherein the refrigerant contains a hydrocarbon.

## Advantageous Effects of Invention

According to one aspect of the present invention, the viscosity index of the refrigerating machine oil can be improved. According to another aspect of the present invention, the viscosity characteristics of the refrigerating machine oil can be improved. According to another aspect of the present invention, the refrigerating machine oil with excellent viscosity characteristics and refrigerant compatibility can be provided. According to another aspect of the present invention, the refrigerating machine oil with the high refrigerant dissolution viscosity can be provided. According to another aspect of the present invention, the refrigerant dissolution viscosity improver for a working fluid composition can be provided.

## Brief Description of Drawing

FIG. 1 is a schematic diagram showing one embodiment of a refrigerating machine.

## Description of Embodiments

One embodiment of the present invention is a refrigerating machine oil containing a base oil and a specific polymer (a (meth)acrylate-based polymer described later).

Examples of the base oil includes a hydrocarbon oil and an oxygen-containing oil. Examples of the hydrocarbon oil include a mineral oil and a synthetic hydrocarbon oil. Examples of the oxygen-containing oil include an ester, an ether, a carbonate, a ketone, a silicone, and a polysiloxane.

Examples of the mineral oil include a paraffinic mineral oil and a naphthenic mineral oil which are obtained by refining a lubricating oil fraction obtained by an atmospheric distillation and a vacuum distillation of a crude oil through a method such as a solvent extraction, a solvent refining, a hydrogenation refining, a hydrogenation cracking, a solvent dewaxing, a hydrogenation dewaxing, a clay treatment, and a sulfuric acid washing. The mineral oil is preferably a hydrogenation cracked mineral oil. The mineral oil is preferably a paraffinic mineral oil. Examples of the synthetic hydrocarbon oil include an alkylbenzene, an alkylnaphthalene, a poly-α-olefin (PAO), a hydrogenated product of a poly-α-olefins (PAO), a wax isomerized oil, a polybutene, and an ethylene-α-olefin copolymer. Among these, the base oil preferably contains at least one selected from a mineral oil and a wax isomerized oil, as they tend to suppress the dissolution amount of a refrigerant containing a hydrocarbon such as R290 and easily increase the refrigerant dissolution viscosity.

The kinematic viscosity at 40°C of the hydrocarbon oil may be 3 $mm^2/s$ or higher, 5 $mm^2/s$ or higher, 7 $mm^2/s$ or higher, or 10 $mm^2/s$ or higher, and may be 400 $mm^2/s$ or lower, 100 $mm^2/s$ or lower, 50 $mm^2/s$ or lower, or 30 $mm^2/s$ or lower. The kinematic viscosity at 40°C of the hydrocarbon oil may be 25 $mm^2/s$ or lower, 20 $mm^2/s$ or lower, 15 $mm^2/s$ or lower, or 13 $mm^2/s$ or lower from the viewpoint of obtaining a higher viscosity index improvement effect by adding the (meth) acrylate-based polymer. The kinematic viscosity at 100°C of the hydrocarbon oil may be 1 $mm^2/s$ or higher, 1.5 $mm^2/s$ or higher, 2 $mm^2/s$ or higher, or 2.5 $mm^2/s$ or higher, and may be 100 $mm^2/s$ or lower, 50 $mm^2/s$ or lower, 30 $mm^2/s$ or lower, or 10 $mm^2/s$ or lower. The viscosity index of the hydrocarbon oil may be 0 or higher, 50 or higher, 80 or higher, 100 or higher, or

105 or higher, and may be 200 or lower, 150 or lower, 130 or lower, or 115 or lower. The kinematic viscosity and viscosity index in this specification refer to the kinematic viscosity and viscosity index measured in accordance with JIS K2283:2000.

Examples of the ester include an aromatic ester, a dibasic acid ester, a polyol ester, a complex ester, a carbonate ester, and a mixture thereof. The ester is preferably at least one selected from a polyol ester and a complex ester, and more preferably a polyol ester. The ester as the base oil does not include the (meth)acrylate-based polymer described later.

The polyol ester is an ester of a polyhydric alcohol and a carboxylic acid. The polyhydric alcohol may be a polyhydric alcohol having 2 to 6 hydroxyl groups. The number of carbon atoms in the polyhydric alcohol may be 4 or more or 5 or more, and 12 or less or 10 or less. The polyhydric alcohol is preferably at least one selected from the group consisting of neopentyl glycol, trimethylol ethane, trimethylol propane, trimethylol butane, di-(trimethylol propane), tri-(trimethylol propane), pentaerythritol, and dipentaerythritol, and more preferably at least one selected from the group consisting of neopentyl glycol, trimethylol propane, pentaerythritol, and dipentaerythritol.

The carboxylic acid may be a monocarboxylic acid or a polycarboxylic acid, preferably a monocarboxylic acid, and more preferably a monocarboxylic aliphatic acid (fatty acid). The fatty acid may be a saturated fatty acid or an unsaturated fatty acid. The number of carbon atoms in the carboxylic acid (fatty acid) may be 4 or more, 5 or more, 8 or more, 10 or more, 12 or more, or 14 or more, and 20 or less, 18 or less, 16 or less, 14 or less, 10 or less, or 9 or less.

Specific examples of the fatty acid include butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, hexadecenoic acid, heptadecanoic acid, octadecanoic acid, octadecenoic acid, nonadecanoic acid, and eicosanoic acid. These fatty acids may be linear or branched.

In one embodiment, the base oil may contain an ester of neopentyl glycol or trimethylol propane and a fatty acid having 4 to 10 carbon atoms. In this case, a higher viscosity index improvement effect can be obtained by adding the (meth) acrylate-based polymer. The fatty acid is preferably a linear or branched saturated fatty acid. In the ester of neopentyl glycol and a fatty acid having 4 to 10 carbon atoms, the number of carbon atoms in the fatty acid may be 4 to 9, 5 to 9, 6 to 9, 7 to 9, or 8 to 9, and may be 8, and the fatty acid may be branched. In the ester of trimethylol propane and a fatty acid having 4 to 10 carbon atoms, the number of carbon atoms in the fatty acid may be 5 to 10, 6 to 10, 7 to 10, or 8 to 10, and the fatty acid may be linear.

In one embodiment, the base oil may contain an ester of neopentyl glycol or trimethylol propane and a fatty acid having 10 to 20 carbon atoms, preferably an ester of trimethylol propane and a fatty acid having 10 to 20 carbon atoms. In this case, the refrigerant dissolution viscosity can be more effectively improved without significantly increasing the kinematic viscosity at 40°C of the refrigerating machine oil by adding the (meth)acrylate-based polymer. The fatty acid having 10 to 20 carbon atoms preferably contains an unsaturated fatty acid having 14 to 20 carbon atoms, more preferably contains oleic acid.

In one embodiment, the base oil may contain an ester of pentaerythritol and a fatty acid having 4 to 9 carbon atoms. The fatty acid is preferably a saturated fatty acid. The fatty acid is preferably a fatty acid having a branch at the $\alpha$-position and/or $\beta$-position, more preferably selected from the group consisting of 2-methylpropanoic acid, 2-methylbutanoic acid, 2-methylpentanoic acid, 2-methylhexanoic acid, 2-ethylpentanoic acid, 2-methylheptanoic acid, 2-ethylhexanoic acid, 3,5,5-trimethylhexanoic acid, and 2-ethylhexadecanoic acid, and further preferably selected from the group consisting of 2-ethylhexanoic acid and 3,5,5-trimethylhexanoic acid.

The complex ester is preferably an ester synthesized from at least one selected from a polyhydric alcohol having 2 to 4 hydroxyl groups, at least one selected from a polybasic acid having 6 to 12 carbon atoms, at least one selected from a monohydric alcohol having 4 to 18 carbon atoms, and at least one selected from a monocarboxylic fatty acid having 2 to 12 carbon atoms.

Examples of the polyhydric alcohol having 2 to 4 hydroxyl groups include neopentyl glycol, trimethylol propane, and pentaerythritol.

The polyhydric alcohol constituting the complex ester preferably further contains a dihydric alcohol having 2 to 10 carbon atoms other than neopentyl glycol, in addition to the polyhydric alcohol having 2 to 4 hydroxyl groups. Examples of the dihydric alcohol having 2 to 10 carbon atoms other than neopentyl glycol include ethylene glycol, propanediol, butanediol, pentanediol, hexanediol, 2-methyl-1,3-propanediol, 3-methyl-1,5-pentanediol, and 2,2-diethyl-1,3-pentanediol.

Examples of the polybasic acid having 6 to 12 carbon atoms include adipic acid, pimelic acid, suberic acid, azelaic acid, sebacic acid, phthalic acid, and trimellitic acid.

Examples of the monohydric alcohol having 4 to 18 carbon atoms include aliphatic alcohols such as butanol, pentanol, hexanol, heptanol, octanol, nonanol, decanol, dodecanol, and oleyl alcohol. These monohydric alcohols may be linear or branched.

Examples of the monocarboxylic fatty acid having 2 to 12 carbon atoms include acetic acid, propanoic acid, butanoic acid, pentanoic acid, hexanoic acid, heptanoic acid, octanoic acid, nonanoic acid, decanoic acid, and dodecanoic acid. These monohydric fatty acids may be linear or branched.

The kinematic viscosity at 40°C of the ester may be 3 $mm^2/s$ or higher, 5 $mm^2/s$ or higher, 7 $mm^2/s$ or higher, or 10 $mm^2/s$ or higher, and may be 500 $mm^2/s$ or lower, 300 $mm^2/s$ or lower, or 100 $mm^2/s$ or lower. The kinematic viscosity at 100°C of the ester may be 1 $mm^2/s$ or higher, 1.5 $mm^2/s$ or higher, or 2 $mm^2/s$ or higher, and may be 100 $mm^2/s$ or lower, 50 $mm^2/s$ or lower, or 10 $mm^2/s$ or lower. The viscosity index of the ester may be 10 or higher, 30 or higher, or 50 or higher, and may be 250 or lower, 200 or lower, or 150 or lower.

The kinematic viscosity at 40°C of the ester of neopentyl glycol or trimethylol propane and a fatty acid having 4 to 10 carbon atoms may be 3 $mm^2/s$ or higher, 5 $mm^2/s$ or higher, or 7 $mm^2/s$ or higher, and may be 30 $mm^2/s$ or lower, 25 $mm^2/s$ or lower, 20 $mm^2/s$ or lower, 15 $mm^2/s$ or lower, or 10 $mm^2/s$ or lower. The kinematic viscosity at 100°C of the ester may be 1 $mm^2/s$ or higher, 1.5 $mm^2/s$ or higher, or 2 $mm^2/s$ or higher, and may be 10 $mm^2/s$ or lower, 5 $mm^2/s$ or lower, or 3 $mm^2/s$ or lower. The viscosity index of the ester may be 10 or higher, 30 or higher, or 40 or higher, and may be 160 or lower, 140 or lower, 120 or lower, 100 or lower, 80 or lower, 70 or lower, or 60 or lower.

The kinematic viscosity at 40°C of the ester of neopentyl glycol or trimethylol propane and a fatty acid having 10 to 20 carbon atoms may be 10 $mm^2/s$ or higher, 15 $mm^2/s$ or higher, or 20 $mm^2/s$ or higher, and may be 60 $mm^2/s$ or lower, 55 $mm^2/s$ or lower, or 50 $mm^2/s$ or lower. The kinematic viscosity at 100°C of the ester may be 3 $mm^2/s$ or higher, 4 $mm^2/s$ or higher, or 5 $mm^2/s$ or higher, and may be 20 $mm^2/s$ or lower, 15 $mm^2/s$ or lower, or 10 $mm^2/s$ or lower. The viscosity index of the ester may be 100 or higher, 150 or higher, or 170 or higher, and may be 300 or lower, 250 or lower, or 220 or lower.

The kinematic viscosity at 40°C of the ester of pentaerythritol and a fatty acid having 4 to 9 carbon atoms may be 30 $mm^2/s$ or higher, 40 $mm^2/s$ or higher, or 50 $mm^2/s$ or higher, and may be 100 $mm^2/s$ or lower, 80 $mm^2/s$ or lower, or 75 $mm^2/s$ or lower. The kinematic viscosity at 100°C of the ester may be 3 $mm^2/s$ or higher, 4 $mm^2/s$ or higher, or 5 $mm^2/s$ or higher, and may be 20 $mm^2/s$ or lower, 15 $mm^2/s$ or lower, or 10 $mm^2/s$ or lower. The viscosity index of the ester may be 50 or higher, 70 or higher, or 80 or higher, and may be 150 or lower, 120 or lower, or 100 or lower.

Examples of the ether include a polyvinyl ether, a polyalkylene glycol, a polyphenyl ether, and a perfluoro ether. The ether is preferably selected from a polyvinyl ether and a polyalkylene glycol, more preferably a polyvinyl ether.

The base oil preferably contains at least one selected from the group consisting of the hydrocarbon oil, the ester, and the ether, more preferably at least one selected from the group consisting of the mineral oil, the synthetic hydrocarbon oil, the ester of neopentyl glycol or trimethylol propane and a fatty acid having 4 to 10 carbon atoms, the ester of neopentyl glycol or trimethylol propane and a fatty acid having 10 to 20 carbon atoms, and esters of pentaerythritol and a fatty acid having 4 to 9 carbon atoms. From the viewpoint of obtaining a higher viscosity index improvement effect by adding the (meth)acrylate-based polymer, the base oil preferably contains at least one selected from the group consisting of the mineral oil, the synthetic hydrocarbon oil, the ester of neopentyl glycol or trimethylol propane and a fatty acid having 4 to 10 carbon atoms, and the ester of pentaerythritol and a fatty acid having 4 to 9 carbon atoms, more preferably at least one selected from the group consisting of the mineral oil, the synthetic hydrocarbon oil, and the ester of neopentyl glycol or trimethylol propane and a fatty acid having 4 to 10 carbon atoms, and even more preferably at least one selected from the group consisting of the mineral oil and the ester of neopentyl glycol or trimethylol propane and a fatty acid having 4 to 10 carbon atoms.

The kinematic viscosity at 40°C of the base oil may be 3 $mm^2/s$ or higher, 4 $mm^2/s$ or higher, or 5 $mm^2/s$ or higher, and may be 500 $mm^2/s$ or lower, 400 $mm^2/s$ or lower, or 300 $mm^2/s$ or lower. The kinematic viscosity at 100°C of the base oil may be 1 $mm^2/s$ or higher, 1.5 $mm^2/s$ or higher, or 2 $mm^2/s$ or higher, and may be 100 $mm^2/s$ or lower, 50 $mm^2/s$ or lower, or 10 $mm^2/s$ or lower. The viscosity index of the base oil may be 10 or higher, 30 or higher, or 50 or higher, and may be 250 or lower, 200 or lower, or 150 or lower.

The content of the base oil may be 50% by mass or more, 60% by mass or more, 70% by mass or more, 80% by mass or more, or 90% by mass or more, based on the total amount of the refrigerating machine oil.

The refrigerating machine oil contains, in addition to the base oil, a polymer (hereinafter also referred to as a "(meth)acrylate-based polymer") containing a structural unit represented by the following formula (1):

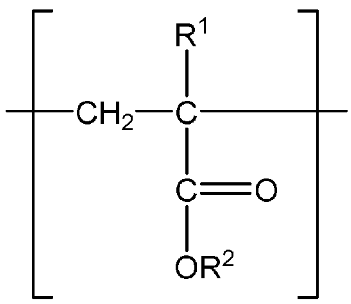

(1)

In the formula, $R^1$ represents a hydrogen atom or a methyl group, preferably a methyl group, and $R^2$ represents an alkyl group or a group in which part of an alkyl group is substituted (hereinafter also referred to as a "substituted alkyl

group").

The alkyl group represented by $R^2$ may be linear or branched. The number of carbon atoms in the alkyl group may be 1 or more and 20 or less. The substituted alkyl group may have, for example, a group containing at least one selected from a nitrogen atom and an oxygen atom. The group containing a nitrogen atom may be an amino group. The group containing an oxygen atom may be an ether group.

The (meth)acrylate-based polymer contains one or more, preferably two or more of the structural units represented by the formula (1). The (meth)acrylate-based polymer preferably contains at least one first structural unit wherein $R^2$ is a methyl group and at least one second structural unit wherein $R^2$ is an alkyl group having 10 or more carbon atoms. The (meth)acrylate-based polymer may contain two or more of the second structural units. The number of carbon atoms in the alkyl group represented by $R^2$ in the second structural unit may be 11 or more, 12 or more, or 13 or more, and 40 or less, 30 or less, 20 or less, 19 or less, or 18 or less.

The alkyl group having 10 or more carbon atoms represented by $R^2$ in the second structural unit may be linear or branched. When the alkyl group is branched, the alkyl group may have a methyl group or an ethyl group as a branch. The branched alkyl group having an ethyl group may be an alkyl group represented by the following formula (2a):

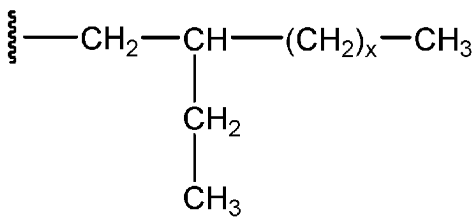

(2a)

wherein x represents an integer of 5 or more.

When the alkyl group having 10 or more carbon atoms represented by $R^2$ in the second structural unit is branched, the alkyl group may be an alkyl group represented by the following formula (2b):

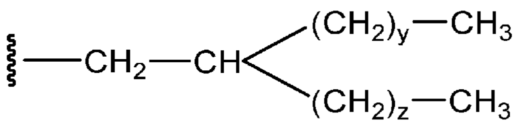

(2b)

wherein y and z each independently represent an integer of 0 or more such that y + z is 6 or more.

The (meth)acrylate-based polymer may contain at least one first structural unit wherein $R^2$ is a methyl group, at least one second structural unit wherein $R^2$ is an alkyl group having 10 or more carbon atoms, and at least one third structural unit wherein $R^2$ is an alkyl group having 2 to 9 carbon atoms. The alkyl group having 2 to 9 carbon atoms is preferably a linear or branched alkyl group having 4 to 8 carbon atoms, more preferably a branched alkyl group having 6 or 8 carbon atoms.

In the (meth)acrylate-based polymer, the average number of carbon atoms in the group represented by $R^2$ (hereinafter also referred to as "average carbon number") is 4 to 18. The lower limit of the average carbon number may be 4.5 or more, 5 or more, 5.5 or more, or 6 or more. The upper limit of the average carbon number may be 17 or less, 16 or less, 15 or less, 14 or less, 13 or less, 12 or less, 11 or less, 10 or less, or 9.5 or less. When the average number of carbon atoms in the group represented by $R^2$ is 4 or more, the (meth)acrylate-based polymer tends to exhibit good compatibility with refrigerating machine oils having slightly lower polarity and a hydrocarbon refrigerant, and tends to have a high viscosity index improvement effect. Furthermore, the (meth)acrylate-based polymer tends to have a high refrigerant dissolution viscosity improvement effect on working fluid compositions containing such refrigerating machine oils and refrigerants, and is useful as a refrigerant dissolution viscosity improver.

The average number of carbon atoms in the group represented by $R^2$ in the (meth)acrylate-based polymer is determined by analyzing the structure of the (meth)acrylate-based polymer using $^{13}C$-NMR analysis ($^1H$-gated decoupling method) to determine the proportion of groups represented by $R^2$ (e.g., a methyl group, a long-chain alkyl group, a branched alkyl group, an amino group, etc.), and calculating the average number of carbon atoms from the obtained proportions and the number of carbon atoms in each group.

The (meth)acrylate-based polymer may be a homopolymer composed of a single structural unit represented by the formula (1), a copolymer composed of two or more structural units represented by the formula (1), or a copolymer composed of a structural unit represented by the formula (1) and another structural unit. The content of the structural unit represented by the formula (1) in the (meth)acrylate-based polymer may be 50% by mole or more, 60% by mole or more, 70% by mole or more, 80% by mole or more, or 90% by mole or more, and may be 100% by mole, based on the total amount of the structural units constituting the (meth)acrylate-based polymer.

The weight-average molecular weight (Mw) of the (meth)acrylate-based polymer may be 500 or more, 1,000 or more, 5,000 or more, 10,000 or more, 30,000 or more, or 40,000 or more, and may be 100,000 or less, 80,000 or less, or 60,000 or less. In another embodiment, the weight-average molecular weight (Mw) of the (meth)acrylate-based polymer may be more than 100,000, 120,000 or more, 150,000 or more, or 200,000 or more, and may be 1,000,000 or less, 800,000 or less, 600,000 or less, 500,000 or less, or 400,000 or less.

The weight-average molecular weight (Mw) of the (meth)acrylate-based polymer means Mw (polystyrene (standard sample) equivalent) obtained by GPC analysis. The Mw is measured, for example, as follows.

Using tetrahydrofuran as a solvent, a solution is prepared by diluting the (meth)acrylate-based polymer to a concentration of 1% by mass. The solution is subjected to analysis using a GPC apparatus (Waters Alliance 2695). Using a column suitable for the molecular weight of the (meth)acrylate-based polymer to be analyzed and a solvent flow rate of 1 ml/min, analysis is carried out using a refractive index detector. The relationship between the column retention time and the molecular weight is separately obtained using polystyrene whose molecular weight is known as a standard, and a calibration curve is prepared in advance. The molecular weight is determined from the obtained retention time based on the calibration curve.

The content of the (meth)acrylate-based polymer may be 1% by mass or more, 3% by mass or more, 5% by mass or more, 10% by mass or more, 15% by mass or more, or 20% by mass or more, and may be 50% by mass or less, 40% by mass or less, 35% by mass or less, or 30% by mass or less, based on the total amount of the refrigerating machine oil.

The refrigerating machine oil may further contain an additional additive. Examples of the additional additive include an acid scavenger, an antioxidant, an extreme pressure agent, an oiliness agent, a defoaming agent, a metal deactivator, an antiwear agent, a viscosity index improver, a pour point depressant, and a detergent-dispersant. The total content of these additives may be 0.1% by mass or more, 1% by mass or more, or 2% by mass or more, and may be 10% by mass or less, 5% by mass or less, or 3% by mass or less, based on the total amount of the refrigerating machine oil.

The kinematic viscosity at 40°C of the refrigerating machine oil may be 5 $mm^2/s$ or higher, 10 $mm^2/s$ or higher, 20 $mm^2/s$ or higher, 30 $mm^2/s$ or higher, or 40 $mm^2/s$ or higher, and may be 500 $mm^2/s$ or lower, 400 $mm^2/s$ or lower, 300 $mm^2/s$ or lower, 200 $mm^2/s$ or lower, 100 $mm^2/s$ or lower, or 90 $mm^2/s$ or lower. The kinematic viscosity at 100°C of the refrigerating machine oil may be 1 $mm^2/s$ or higher, 2 $mm^2/s$ or higher, or 3 $mm^2/s$ or higher, and may be 100 $mm^2/s$ or lower, 50 $mm^2/s$ or lower, or 40 $mm^2/s$ or lower. The viscosity index of the refrigerating machine oil may be 80 or higher, 100 or higher, 150 or higher, 200 or higher, or 220 or higher, and may be 500 or lower, 400 or lower, or 300 or lower.

The refrigerating machine oil is used with a refrigerant in a refrigerating machine. FIG. 1 is a schematic diagram showing one embodiment of a refrigerating machine. As shown in FIG. 1, the refrigerating machine 10 contains a refrigerant circulation system 6 in which a compressor (refrigerant compressor) 1, a condenser (gas cooler) 2, an expansion mechanism 3 (capillary, expansion valve, etc.), and an evaporator (heat exchanger) 4 are sequentially connected by a flow path 5. The refrigerant circulation system 6 contains a refrigerating machine oil and a refrigerant. The refrigerant circulation system 6 may further contain an accumulator 7 between the evaporator 4 and the compressor 1 (on the side of the compressor 1) to suppress and prevent liquid refrigerant from directly flowing into the compressor 1.

Examples of such a refrigerating machine 10 include an air conditioner for an automobile, a dehumidifier, a refrigerator, a refrigerated warehouse, a vending machine, a showcase, a cooling device in a chemical plant, a residential air conditioner, a package air conditioner, and a heat pump for a water heater.

In the refrigerant circulation system 6, first, the high-temperature (usually 70 to 120°C) refrigerant discharged from the compressor 1 into the flow path 5 becomes a high-density fluid (supercritical fluid, etc.) in the condenser 2. Subsequently, the refrigerant is liquefied by passing through the narrow flow path of the expansion mechanism 3, and further vaporized in the evaporator 4 to become low-temperature (usually -40 to 0°C). The cooling by the refrigerating machine 10 utilizes the phenomenon that the refrigerant absorbs heat from the surroundings when it vaporizes in the evaporator 4.

In the compressor 1, a small amount of refrigerant and a large amount of refrigerating machine oil coexist under high-temperature (usually 70 to 120°C) conditions. The refrigerant discharged from the compressor 1 into the flow path 5 is in a gaseous state and contains a small amount (usually 1 to 10% by volume) of refrigerating machine oil as a mist, and a small amount of refrigerant is dissolved in this misty refrigerating machine oil (point a in FIG. 1).

In the condenser 2, the gaseous refrigerant is compressed to become a high-density fluid, and a large amount of refrigerant and a small amount of refrigerating machine oil coexist under relatively high-temperature (usually 40 to 80°C) conditions (point b in FIG. 1). Furthermore, the mixture of a large amount of refrigerant and a small amount of refrigerating machine oil is sequentially sent to the expansion mechanism 3 and the evaporator 4, where it rapidly becomes low-temperature (usually -40 to 0°C) (points c and d in FIG. 1), and is returned to the compressor 1.

Another embodiment of the present invention can be said to be a working fluid composition containing the above refrigerating machine oil and a refrigerant. The refrigerant dissolution viscosity of the working fluid composition can be improved by using the above (meth)acrylate-based polymer. That is, another embodiment of the present invention can be said to be a refrigerant dissolution viscosity improver for a working fluid composition containing a refrigerating machine oil and a refrigerant, the refrigerant dissolution viscosity improver containing the above (meth)acrylate-based polymer.

Examples of the refrigerant include a saturated hydrofluorocarbon (also called HFC), an unsaturated hydrofluorocarbon (also called HFO), a hydrocarbon, a fluorinated ether, bis(trifluoromethyl) sulfide, trifluoroiodomethane, ammonia, and carbon dioxide. The refrigerant may be a single refrigerant of these refrigerants or a mixed refrigerant of two or more.
The refrigerant preferably contains a hydrocarbon. The content of the hydrocarbon may be 50% by mass or more, 60% by mass or more, 70% by mass or more, 80% by mass or more, 90% by mass or more, or 95% by mass or more, based on the total amount of the refrigerant. The refrigerant may consist of a hydrocarbon.
Examples of the saturated hydrofluorocarbon include a saturated hydrofluorocarbon having 1 to 3 carbon atoms, more preferably 1 to 2 carbon atoms. Examples of the saturated hydrofluorocarbon include difluoromethane (R32), trifluoromethane (R23), pentafluoroethane (R125), 1,1,2,2-tetrafluoroethane (R134), 1,1,1,2-tetrafluoroethane (R134a), 1,1,1-trifluoroethane (R143a), 1,1-difluoroethane (R152a), fluoroethane (R161), 1,1,1,2,3,3,3-heptafluoropropane (R227ea), 1,1,1,2,3,3-hexafluoropropane (R236ea), 1,1,1,3,3,3-hexafluoropropane (R236fa), 1,1,1,3,3-pentafluoropropane (R245fa), and 1,1,1,3,3-pentafluorobutane (R365mfc).
Preferred examples of the saturated hydrofluorocarbon include R32 alone; R23 alone; R134a alone; R125 alone; a mixture of R134a/R32 = 60 to 80% by mass/40 to 20% by mass; a mixture of R32/R125 = 40 to 70% by mass/60 to 30% by mass; a mixture of R125/R143a = 40 to 60% by mass/60 to 40% by mass; a mixture of R134a/R32/R125 = 60% by mass/30% by mass/10% by mass; a mixture of R134a/R32/R125 = 40 to 70% by mass/15 to 35% by mass/5 to 40% by mass; a mixture of R125/R134a/R143a = 35 to 55% by mass/1 to 15% by mass/40 to 60% by mass. More specific examples include a mixture of R134a/R32 = 70/30% by mass; a mixture of R32/R125 = 60/40% by mass; a mixture of R32/R125 = 50/50% by mass (R410A); a mixture of R32/R125 = 45/55% by mass (R410B); a mixture of R125/R143a = 50/50% by mass (R507C); a mixture of R32/R125/R134a = 30/10/60% by mass; a mixture of R32/R125/R134a = 23/25/52% by mass (R407C); a mixture of R32/R125/R134a = 25/15/60% by mass (R407E); a mixture of R125/R134a/R143a = 44/4/52% by mass (R404A).
Examples of the unsaturated hydrofluorocarbon include an unsaturated hydrofluorocarbon having 2 to 4 carbon atoms, having at least one carbon-carbon double bond, and containing fluorine and hydrogen. The unsaturated hydrofluorocarbon is preferably a fluoropropene, more preferably a fluoropropene having 3 to 5 fluorine atoms. Examples of the unsaturated hydrofluorocarbon include 1,2,3,3,3-pentaf luoropropene (HFO-1225ye), 1,3,3,3-tetrafluoropropene (HFO-1234ze), 2,3,3,3-tetrafluoropropene (HFO-1234yf), 1,2,3,3-tetrafluoropropene (HFO-1234ye), and 3,3,3-trifluoropropene (HFO-1243zf). The unsaturated hydrofluorocarbon is preferably at least one selected from HFO-1225ye, HFO-1234ze, and HFO-1234yf. The unsaturated hydrofluorocarbon may also be a fluoroethylene having 1 to 4 fluorine atoms, preferably 1,1,2,3-trifluoroethylene.
The hydrocarbon is preferably a hydrocarbon having 1 to 5 carbon atoms, more preferably a hydrocarbon having 2 to 4 carbon atoms. Examples of the hydrocarbon include methane, ethylene, ethane, propylene, propane (R290), cyclopropane, n-butane, isobutane, cyclobutane, methylcyclopropane, 2-methylbutane, and n-pentane. The hydrocarbon is preferably at least one selected from the group consisting of propane, n-butane, isobutane, and 2-methylbutane.
The low-temperature side two-phase separation temperature of the refrigerating machine oil and the refrigerant may be, for example, 10°C or lower, preferably 0°C or lower, more preferably -20°C or lower, and -30°C or lower when the oil rate (amount of refrigerating machine oil (g) / total amount of refrigerating machine oil and refrigerant (g) $\times$ 100) (% by mass) is 20% by mass. The refrigerant exhibiting such a low-temperature side two-phase separation temperature may be a refrigerant containing the above hydrocarbons, preferably a refrigerant containing propane or isobutane.
The content of the refrigerating machine oil in the working fluid composition may be 1 part by mass or more, preferably 2 parts by mass or more, and 500 parts by mass or less, preferably 400 parts by mass or less, based on 100 parts by mass of the refrigerant.

## Examples

Hereinafter, the present invention will be described more specifically based on Examples, but the present invention is not limited to these Examples.
Using the base oils and (meth)acrylate-based polymers shown below, refrigerating machine oils having the compositions (% by mass) shown in Tables 1 to 9 were prepared. In all of these refrigerating machine oils, the base oil and the (meth)acrylate-based polymer were dissolved with each other.

(Base oils)

Base oil 1: Hydrogenated cracked mineral oil (kinematic viscosity at 40°C: 19.4 $mm^2/s$, kinematic viscosity at 100°C: 4.2 $mm^2/s$, viscosity index: 126)

Base oil 2: Hydrogenated cracked mineral oil (kinematic viscosity at 40°C: 11.7 $mm^2/s$, kinematic viscosity at 100°C: 3.0 $mm^2/s$, viscosity index: 106)

Base oil 3: Ester of trimethylolpropane and oleic acid (kinematic viscosity at 40°C: 47.6 $mm^2/s$, kinematic viscosity at 100°C: 9.6 $mm^2/s$, viscosity index: 191)

Base oil 4: Ester of neopentyl glycol and 2-ethylhexanoic acid (kinematic viscosity at 40°C: 7.4 $mm^2/s$, kinematic viscosity at 100°C: 2.0 $mm^2/s$, viscosity index: 52)

Base oil 5: Ester of pentaerythritol and 2-ethylhexanoic acid/3,5,5-trimethylhexanoic acid (molar ratio: 50/50) (kinematic viscosity at 40°C: 68.4 $mm^2/s$, kinematic viscosity at 100°C: 8.4 $mm^2/s$, viscosity index: 90) Base oil 6: Wax isomerized oil (kinematic viscosity at 40°C: 15.7 $mm^2/s$, kinematic viscosity at 100°C: 3.8 $mm^2/s$, viscosity index: 143)

Base oil 7: Hydrogenated product of poly-$\alpha$-olefin (kinematic viscosity at 40°C: 18.4 $mm^2/s$, kinematic viscosity at 100°C: 4.1 $mm^2/s$, viscosity index: 124)

Base oil 8: Hydrogenated product of poly-$\alpha$-olefin (kinematic viscosity at 40°C: 29.8 $mm^2/s$, kinematic viscosity at 100°C: 5.8 $mm^2/s$, viscosity index: 143)

Base oil 9: Ester of trimethylolpropane and n-octanoic acid/n-decanoic acid (kinematic viscosity at 40°C: 20.5 $mm^2/s$, kinematic viscosity at 100°C: 4.5 $mm^2/s$, viscosity index: 137)

Base oil 10: Ester of neopentyl glycol and oleic acid (kinematic viscosity at 40°C: 24.4 $mm^2/s$, kinematic viscosity at 100°C: 5.9 $mm^2/s$, viscosity index: 204)

Base oil 11: Hydrogenated refined mineral oil (kinematic viscosity at 40°C: 96.3 $mm^2/s$, kinematic viscosity at 100°C: 8.6 $mm^2/s$, viscosity index: 36)

Base oil 12: Alkylbenzene (kinematic viscosity at 40°C: 19.3 $mm^2/s$, kinematic viscosity at 100°C: 3.7 $mm^2/s$, viscosity index: 48)

((Meth)acrylate-based polymers)

Polymer 1: (Meth)acrylate-based polymer (composition of $R^2$ in formula (1) (molar ratio): methyl group (71) / linear alkyl groups having 10 or more carbon atoms (19) / branched alkyl groups having 10 or more carbon atoms (10), average carbon number of $R^2$: 6.4, Mw: 21,000)

Polymer 2: (Meth)acrylate-based polymer (composition of $R^2$ in formula (1) (molar ratio): methyl group (30) / linear alkyl groups having 10 or more carbon atoms (70) (average carbon number: 13), average carbon number of $R^2$: 9.4, Mw: 50,000)

Polymer 3: (Meth)acrylate-based polymer (composition of $R^2$ in the formula (1) (molar ratio): linear alkyl groups having 10 or more carbon atoms (54) / branched alkyl groups having 10 or more carbon atoms (46) (including branched alkyl group having an ethyl group (9)), average carbon number of $R^2$: 14.9, Mw: 8,000)

Polymer 4: (Meth)acrylate-based polymer (composition of $R^2$ in formula (1) (molar ratio): methyl group (22) / linear alkyl groups having 10 or more carbon atoms (66) / N,N-dimethylethylamino group (2) / N,N-diethylethylamino group (10), average carbon number of $R^2$: 8.7, Mw: 47,000)

Polymer 5: (Meth)acrylate-based polymer (composition of $R^2$ in formula (1) (molar ratio): methyl group (70) / linear alkyl groups having 10 or more carbon atoms (17) / branched alkyl groups having 10 or more carbon atoms (13), average carbon number of $R^2$: 6.7, Mw: 80,000)

Polymer 6: (Meth)acrylate-based polymer (composition of $R^2$ in formula (1) (molar ratio): methyl group (38) / linear alkyl groups having 10 or more carbon atoms (50) / branched alkyl groups having 10 or more carbon atoms (5) / 2-methylpentyl group (5) / 2-ethylhexyl group (2), average carbon number of $R^2$: 7.9, Mw: 230,000)

Polymer 7: (Meth)acrylate-based polymer (composition of $R^2$ in formula (1) (molar ratio): methyl group (40) / linear alkyl groups having 10 or more carbon atoms (51) / branched alkyl groups having 10 or more carbon atoms (5) / 2-methylpentyl group (3) / 2-ethylhexyl group (1), average carbon number of $R^2$: 8.4, Mw: 420,000)

(Comparative polymer)

Ethylene-alpha olefin copolymer

(Measurement of properties of refrigerating machine oil)

The kinematic viscosity at 40°C and 100°C, and the viscosity index of the refrigerating machine oils in the Examples were measured in accordance with JIS K2283: 2000. The results are shown in Tables 1 to 9.

(Refrigerant compatibility of refrigerating machine oil)

The refrigerant compatibility of the refrigerating machine oils in the Examples was evaluated in accordance with the "Test method for compatibility with refrigerant" of JIS K2211: 2009. Specifically, 4 g of the refrigerating machine oil was mixed with 16 g of R290, which is a refrigerant containing a hydrocarbon, and it was observed whether the refrigerating machine oil and the refrigerant were dissolved with each other at 0°C. The case where the refrigerating machine oil and the refrigerant were dissolved with each other was evaluated as "compatible," and the case where the refrigerating machine oil and the refrigerant were separated into two layers was evaluated as "separated." The results are shown in Tables 1 to 9.

[Table 1]

| | | | Example | | | | | | |
|---|---|---|---|---|---|---|---|---|---|
| | | | 1 | 2 | 3 | 4 | 5 | 6 | 7 |
| Composition (% by mass) | Base oill | | Balance | Balance | Balance | Balance | Balance | Balance | Balance |
| | Polymer 1 | | 10 | 5 | - | - | - | - | - |
| | Polymer 2 | | - | - | 20 | 10 | 5 | - | - |
| | Polymer 3 | | - | - | - | - | - | 10 | 5 |
| Properties | Kinematic viscosity ($mm^2/s$) | 40°C | 24.7 | 21.6 | 60.5 | 32.5 | 24.7 | 29.3 | 23.7 |
| | | 100°C | 5.5 | 4.8 | 13.1 | 7.5 | 5.6 | 6.2 | 5.1 |
| | Viscosity index | | 167 | 146 | 224 | 210 | 179 | 166 | 149 |
| Refrigerant compatibility | | | Compatible | Compatible | Compatible | Compatible | Compatible | Compatible | Compatible |

[Table 2]

| | | | Example | | | | | | |
|---|---|---|---|---|---|---|---|---|---|
| | | | 8 | 9 | 10 | 11 | 12 | 13 | 14 |
| Composition (% by mass) | Base oil2 | | Balance | Balance | Balance | Balance | Balance | Balance | Balance |
| | Polymer 2 | | 30 | 40 | - | - | - | - | - |
| | Polymer 4 | | - | - | 10 | 20 | 40 | - | - |
| | Polymer 5 | | - | - | - | - | - | 10 | 20 |
| Properties | Kinematic viscosity ($mm^2/s$) | 40°C | 89.2 | 193.2 | 20.0 | 35.3 | 117.3 | 15.3 | 21.6 |
| | | 100°C | 18.4 | 31.8 | 5.3 | 9.1 | 23.9 | 4.3 | 6.5 |
| | Viscosity index | | 227 | 210 | 221 | 254 | 236 | 205 | 285 |
| Refrigerant compatibility | | | Compatible | Compatible | Compatible | Compatible | Compatible | Compatible | Compatible |

[Table 3]

| | | | Example | | | | | |
|---|---|---|---|---|---|---|---|---|
| | | | 15 | 16 | 17 | 18 | 19 | 20 |
| Composition (% by mass) | Base oil2 | | Balance | Balance | Balance | Balance | Balance | Balance |
| | Polymer 6 | | 5 | 10 | 20 | - | - | - |
| | Polymer 7 | | - | - | - | 5 | 10 | 20 |
| Properties | Kinematic viscosity ($mm^2/s$) | 40°C | 16.9 | 24.4 | 54.7 | 17.3 | 25.1 | 52.9 |
| | | 100°C | 4.9 | 7.5 | 16.0 | 5.1 | 8.2 | 17.5 |
| | Viscosity index | | 241 | 308 | 309 | 261 | 334 | 348 |
| Refrigerant compatibility | | | Compatible | Compatible | Compatible | Compatible | Compatible | Compatible |

[Table 4]

| | | | Example | | | | | |
|---|---|---|---|---|---|---|---|---|
| | | | 21 | 22 | 23 | 24 | 25 | 26 |
| Composition (% by mass) | Base oil3 | | Balance | Balance | Balance | Balance | Balance | Balance |
| | Polymer 1 | | 10 | 5 | - | - | - | - |
| | Polymer 2 | | - | - | 10 | 5 | - | - |
| | Polymer 3 | | - | - | - | - | 10 | 5 |
| Properties | Kinematic viscosity ($mm^2/s$) | 40°C | 62.4 | 54.0 | 84.9 | 62.8 | 69.6 | 56.9 |
| | | 100°C | 12.4 | 10.9 | 16.6 | 12.6 | 13.3 | 11.3 |
| | Viscosity index | | 201 | 198 | 212 | 204 | 197 | 196 |
| Refrigerant compatibility | | | Compatible | Compatible | Compatible | Compatible | Compatible | Compatible |

[Table 5]

| | | | Example | | | | | | | |
|---|---|---|---|---|---|---|---|---|---|---|
| | | | 27 | 28 | 29 | 30 | 31 | 32 | 33 | 34 |
| Composition (% by mass) | Base oil4 | | Balance | Balance | Balance | Balance | Balance | Balance | Balance | Balance |
| | Polymer 1 | | 10 | 5 | - | - | - | - | - | - |
| | Polymer 2 | | - | - | 10 | 5 | - | - | - | - |
| | Polymer 3 | | - | - | - | - | 10 | 5 | - | - |
| | Polymer 4 | | - | - | - | - | - | - | 5 | 10 |
| Properties | Kinematic viscosity ($mm^2/s$) | 40°C | 12.4 | 9.6 | 17.6 | 11.6 | 13.2 | 9.9 | 11.0 | 16.1 |
| | | 100°C | 3.3 | 2.6 | 4.6 | 3.1 | 3.4 | 2.6 | 3.0 | 4.3 |
| | Viscosity index | | 134 | 99 | 198 | 139 | 135 | 100 | 136 | 194 |
| Refrigerant compatibility | | | Compatible | Compatible | Compatible | Compatible | Compatible | Compatible | Compatible | Compatible |

[Table 6]

| | | | Example | | | | | |
|---|---|---|---|---|---|---|---|---|
| | | | 35 | 36 | 37 | 38 | 39 | 40 |
| Composition (% by mass) | Base oil4 | | Balance | Balance | Balance | Balance | Balance | Balance |
| | Polymer 5 | | 5 | 10 | - | - | - | - |
| | Polymer 6 | | - | - | 5 | 10 | - | - |
| | Polymer 7 | | - | - | - | - | 5 | 10 |
| Properties | Kinematic viscosity ($mm^2/s$) | 40°C | 10.4 | 14.5 | 15.2 | 26.8 | 15.9 | 28.4 |
| | | 100°C | 2.9 | 4.0 | 4.2 | 7.4 | 4.5 | 8.1 |
| | Viscosity index | | 133 | 193 | 203 | 266 | 220 | 283 |
| Refrigerant compatibility | | | Compatible | Compatible | Compatible | Compatible | Compatible | Compatible |

[Table 7]

| | | Example | | | | | |
|---|---|---|---|---|---|---|---|
| | | 41 | 42 | 43 | 44 | 45 | 46 |
| Composition (% by mass) | Base oil5 | Balance | Balance | Balance | Balance | Balance | Balance |
| | Polymer 2 | 5 | 10 | 15 | 20 | 30 | 40 |
| Properties | Kinematic viscosity ($mm^2/s$) 40°C | 93.4 | 127.3 | 172.7 | 233.0 | 428.9 | 910.0 |
| | Kinematic viscosity ($mm^2/s$) 100°C | 11.7 | 15.9 | 21.4 | 28.2 | 44.3 | 75.9 |
| | Viscosity index | 114 | 133 | 147 | 158 | 159 | 160 |
| Refrigerant compatibility | | Compatible | Compatible | Compatible | Compatible | Compatible | Compatible |

[Table 8]

| | | | Example | | | | | |
|---|---|---|---|---|---|---|---|---|
| | | | 47 | 48 | 49 | 50 | 51 | 52 |
| Composition (% by mass) | Base oil6 | | Balance | Balance | - | - | - | - |
| | Base oil7 | | - | - | Balance | Balance | - | - |
| | Base oil8 | | - | - | - | - | Balance | Balance |
| | Polymer 2 | | 10 | 20 | 10 | 20 | 10 | 20 |
| Properties | Kinematic viscosity ($mm^2/s$) | 40°C | 26.1 | 48.1 | 29.2 | 54.2 | 46.2 | 83.4 |
| | | 100°C | 6.7 | 11.5 | 6.9 | 12.0 | 9.4 | 15.7 |
| | Viscosity index | | 233 | 244 | 213 | 224 | 193 | 201 |
| Refrigerant compatibility | | | Compatible | Compatible | Compatible | Compatible | Compatible | Compatible |

[Table 9]

| | | | Example | | | | |
|---|---|---|---|---|---|---|---|
| | | | 53 | 54 | 55 | 56 | 57 |
| Composition (% by mass) | Base oil9 | | Balance | Balance | Balance | - | - |
| | Base oil10 | | - | - | - | Balance | Balance |
| | Polymer 2 | | 10 | 15 | 20 | 10 | 20 |
| Properties | Kinematic viscosity ($mm^2/s$) | 40°C | 42.0 | 59.1 | 83.4 | 49.6 | 92.5 |
| | | 100°C | 9.0 | 12.3 | 16.7 | 11.6 | 20.0 |
| | Viscosity index | | 205 | 212 | 217 | 236 | 242 |
| Refrigerant compatibility | | | Compatible | Compatible | Compatible | Compatible | Compatible |

The refrigerating machine oils in the Examples shown in Tables 10 to 13 were measured for refrigerant dissolution viscosity, refrigerant ratio (refrigerant dissolution amount), and two-phase separation temperature according to the following procedures. For reference, the refrigerating machine oils in the Reference Examples shown in Tables 10 to 13 were also measured in the same manner. The results are shown in Tables 10 to 13.

(Measurement of refrigerant dissolution viscosity)

First, a pressure-resistant container (volume V = 400 $cm^3$) equipped with a vibrating viscometer, thermometer, and pressure gauge was filled with 100 g of refrigerating machine oil. After vacuum degassing the inside of the pressure-resistant container, the refrigerant (R290) was filled, and the temperature and pressure inside the pressure-resistant container were adjusted to 80°C and an absolute pressure of 2.8 MPa, respectively, to prepare a working fluid composition consisting of refrigerating machine oil and refrigerant. If the predetermined conditions were not met, the filling amount of the refrigerating machine oil was appropriately adjusted. Under these conditions, the absolute viscosity (mPa·s) of the working fluid composition was measured using a vibrating viscometer. The refrigerant dissolution viscosity R-Vis ($mm^2/s$) of the working fluid composition was determined as P/Dw, where P is the measured absolute viscosity (mPa·s) and Dw is the density of the working fluid composition ($g/cm^3$). The density Dw ($g/cm^3$) of the working fluid composition was calculated by the following formula:

$$Dw = (Rf - Vv \times Dv + Of) / Vmix$$

Dw: Density of the working fluid composition ($g/cm^3$)
Rf: Amount of refrigerant filled into the pressure-resistant container (g)
Vv: Volume of the refrigerant vapor part in the pressure-resistant container ($cm^3$) (= volume of the pressure-resistant container V - volume of the working fluid composition Vmix)
Dv: Density of the refrigerant vapor ($g/cm^3$)
Of: Amount of refrigerating machine oil filled into the pressure-resistant container (g)
Vmix: Volume of the working fluid composition ($cm^3$)

(Measurement of refrigerant ratio (refrigerant dissolution amount))

The refrigerant ratio S (% by mass) in the working fluid composition was calculated by the following formula under the same conditions as the measurement of the refrigerant dissolution viscosity:

$$S = (Rf - Vv \times Dv) \times 100 / ((Rf - Vv \times Dv) + Of)$$

S: Refrigerant ratio (% by mass) in the working fluid composition
Rf: Amount of refrigerant filled into the pressure-resistant container (g)
Vv: Volume of the refrigerant vapor part in the pressure-resistant container ($cm^3$) (= volume of the pressure-resistant container V - volume of the working fluid composition Vmix)
Dv: Density of the refrigerant vapor ($g/cm^3$)

Of: Amount of refrigerating machine oil filled into the pressure-resistant container (g)

(Measurement of two-phase separation temperature)

The low-temperature side two-phase separation temperature was measured when the oil rate (amount of refrigerating machine oil (g) / total amount of refrigerating machine oil and refrigerant (g) × 100) (% by mass) was 20% by mass. Specifically, the low-temperature side two-phase separation temperature was measured using 20 g of refrigerating machine oil and 80 g of refrigerant (R290).

[Table 10]

| | | | Example 21 | Example 23 | Example 24 | Example 25 | Reference Example 3 |
|---|---|---|---|---|---|---|---|
| Composition of refrigerating machine oil (% by mass) | Base oil 3 | | Balance | Balance | Balance | Balance | 100 |
| | Polymer 1 | | 10 | - | - | - | - |
| | Polymer 2 | | - | 10 | 5 | - | - |
| | Polymer 3 | | - | - | - | 10 | - |
| Properties of refrigerating machine oil | Kinematic viscosity ($mm^2/s$) | 40°C | 62.4 | 84.9 | 62.8 | 69.6 | 47.6 |
| | | 100°C | 12.4 | 16.6 | 12.6 | 13.3 | 9.6 |
| | Viscosity index | | 201 | 212 | 204 | 197 | 191 |
| Properties of working fluid | Refrigerant dissolution viscosity ($mm^2/s$) | | 1.9 | 2.5 | 2.0 | 2.1 | 1.7 |
| | Refrigerant ratio (% by mass) | | 29.6 | 29.6 | 29.1 | 28.5 | 27.8 |
| | Two-phase separation temperature (°C) | | -39 | -42 | -42 | -40 | -42 |

[Table 11]

| | | | Example 21 | Example 23 | Example 24 | Example 25 | Reference Example 3 |
|---|---|---|---|---|---|---|---|
| Composition of refrigerating machine oil (% by mass) | Base oil 3 | | Balance | Balance | Balance | Balance | 100 |
| | Polymer 1 | | 10 | - | - | - | - |
| | Polymer 2 | | - | 10 | 5 | - | - |
| | Polymer 3 | | - | - | - | 10 | - |
| Properties of refrigerating machine oil | Kinematic viscosity ($mm^2/s$) | 40°C | 62.4 | 84.9 | 62.8 | 69.6 | 47.6 |
| | | 100°C | 12.4 | 16.6 | 12.6 | 13.3 | 9.6 |
| | Viscosity index | | 201 | 212 | 204 | 197 | 191 |
| Properties of working fluid | Refrigerant dissolution viscosity ($mm^2/s$) | | 1.9 | 2.5 | 2.0 | 2.1 | 1.7 |
| | Refrigerant ratio (% by mass) | | 29.6 | 29.6 | 29.1 | 28.5 | 27.8 |
| | Two-phase separation temperature (°C) | | -39 | -42 | -42 | -40 | -42 |

[Table 12]

| | | | Example 41 | Example 42 | Example 43 | Example 44 | Reference Example 4 |
|---|---|---|---|---|---|---|---|
| Composition of refrigerating machine oil (% by mass) | Base oil 5 | | Balance | Balance | Balance | Balance | 100 |
| | Polymer 2 | | 5 | 10 | 15 | 20 | - |
| Properties of refrigerating machine oil | Kinematic viscosity ($mm^2/s$) | 40°C | 93.4 | 127.3 | 172.7 | 233.0 | 68.4 |
| | | 100°C | 11.7 | 15.9 | 21.4 | 28.2 | 8.4 |
| | Viscosity index | | 114 | 133 | 147 | 158 | 90 |
| Properties of working fluid | Refrigerant dissolution viscosity ($mm^2/s$) | | 0.8 | 1.0 | 1.2 | 1.4 | 0.7 |
| | Refrigerant ratio (% by mass) | | 33.7 | 34.5 | 35.3 | 36.1 | 36.6 |
| | Two-phase separation temperature (°C) | | <-60 | <-60 | <-60 | <-60 | <-60 |

[Table 13]

| | | | Example 50 | Reference Example 5 | Example 53 | Example 54 | Reference Example 6 | Reference Example 7 | Reference Example 8 |
|---|---|---|---|---|---|---|---|---|---|
| Composition of refrigerating machine oil (% by mass) | Base oil 7 | | Balance | 100 | - | - | - | - | - |
| | Base oil 9 | | - | - | Balance | Balance | 100 | - | - |
| | Base oil 11 | | - | - | - | - | - | 100 | - |
| | Base oil 12 | | - | - | - | - | - | - | Balance |
| | Polymer 2 | | 20 | - | 10 | 15 | - | - | - |
| | Comparative polymer | | - | - | - | - | - | - | 30 |
| Properties of refrigerating machine oil | Kinematic viscosity ($mm^2/s$) | 40°C | 54.2 | 18.4 | 42.0 | 59.1 | 20.5 | 96.3 | 53.9 |
| | | 100°C | 12.0 | 4.1 | 9.0 | 12.3 | 4.5 | 8.6 | 8.3 |
| | Viscosity index | | 224 | 124 | 205 | 212 | 137 | 36 | 127 |
| Properties of working fluid | Refrigerant dissolution viscosity ($mm^2/s$) | | 0.75 | <0.4 | 1.05 | 1.21 | 0.7 | 0.57 | 0.49 |
| | Refrigerant ratio (% by mass) | | 49.2 | - | 36.2 | 35.0 | 36.4 | 40.0 | 45.0 |
| | Two-phase separation temperature (°C) | | <-60 | <-60 | <-60 | <-60 | <-60 | <-60 | <-60 |

## Reference Signs List

1: compressor, 2: condenser, 3: expansion mechanism, 4: evaporator, 5: flow path, 6: refrigerant circulation system, 7: accumulator, 10: refrigerating machine.

## Claims

1. A refrigerating machine oil comprising:

    a base oil; and
    a polymer comprising a structural unit represented by the following formula (1):

    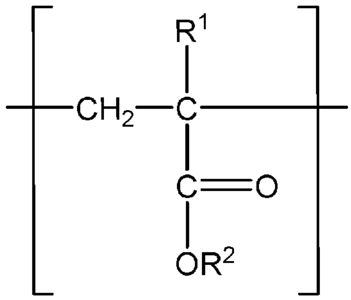 (1)

    wherein $R^1$ represents a hydrogen atom or a methyl group, and $R^2$ represents an alkyl group or a group in which part of an alkyl group is substituted,
    wherein the group represented by $R^2$ in the polymer has an average number of carbon atoms of 4 to 18.

2. The refrigerating machine oil according to claim 1, being used with a refrigerant comprising a hydrocarbon.

3. A working fluid composition comprising:

    the refrigerating machine oil according to claim 1; and
    a refrigerant.

4. The working fluid composition according to claim 3, wherein the refrigerant comprises a hydrocarbon.

5. A refrigerant dissolution viscosity improver for a working fluid composition comprising a refrigerating machine oil and a refrigerant, the refrigerant dissolution viscosity improver comprising a polymer comprising a structural unit represented by the following formula (1):

    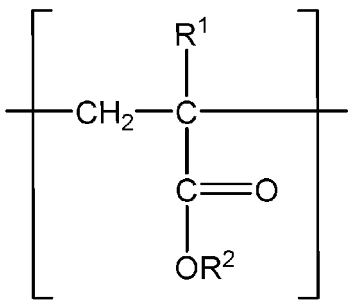 (1)

    wherein $R^1$ represents a hydrogen atom or a methyl group, and $R^2$ represents an alkyl group or a group in which part of an alkyl group is substituted,
    wherein the group represented by $R^2$ in the polymer has an average number of carbon atoms of 4 to 18.

6. The refrigerant dissolution viscosity improver according to claim 5, wherein the refrigerant comprises a hydrocarbon.

*Fig.1*

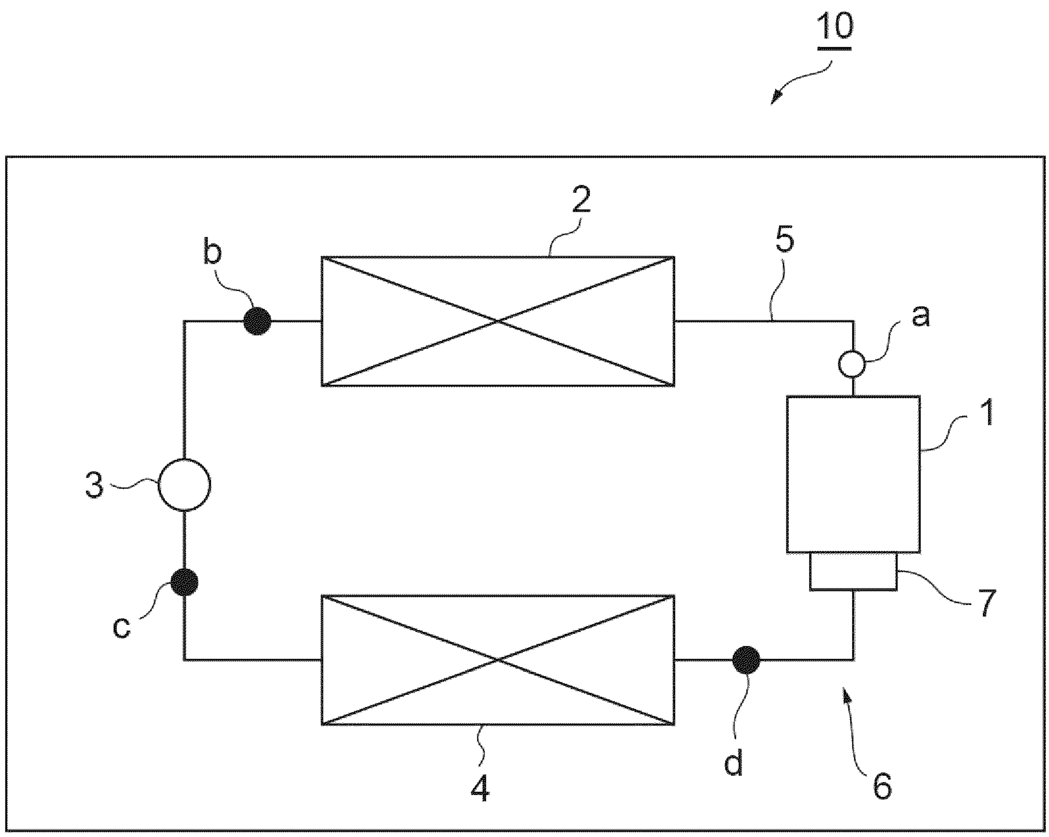

## INTERNATIONAL SEARCH REPORT

International application No.
**PCT/JP2023/031557**

**A. CLASSIFICATION OF SUBJECT MATTER**

***C10M 145/14***(2006.01)i; ***C09K 5/04***(2006.01)i; *C10N 30/00*(2006.01)n; *C10N 40/30*(2006.01)n
FI: C10M145/14; C09K5/04 B; C10N40:30; C10N30:00 Z

According to International Patent Classification (IPC) or to both national classification and IPC

**B. FIELDS SEARCHED**

Minimum documentation searched (classification system followed by classification symbols)

C10M; C10N

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/108547 A1 (ARKEMA INC.) 03 September 2009 (2009-09-03) examples, particularly, example 50, claims | 1-6 |
| X | WO 2021/221058 A1 (ENEOS CORP.) 04 November 2021 (2021-11-04) paragraphs [0079], [0080], examples 1, 2, claims | 1-6 |
| A | WO 2018/074584 A1 (JXTG NIPPON OIL & ENERGY CORP.) 26 April 2018 (2018-04-26) example 1, comparative example 1, claims | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/031557**

| Patent document cited in search report | Publication date (day/month/year) | Patent family member(s) | Publication date (day/month/year) |
|---|---|---|---|
| WO 2009/108547 A1 | 03 September 2009 | JP 2011-513538 A | |
| | | US 2011/0006248 A1 | |
| | | EP 2250230 A1 | |
| | | CN 101965388 A | |
| | | KR 10-2010-0121632 A | |
| WO 2021/221058 A1 | 04 November 2021 | US 2023/0167377 A1 paragraphs [0079], [0080], examples 1, 2, claims | |
| | | EP 4134416 A1 | |
| | | KR 10-2022-0158076 A | |
| | | CN 115443323 A | |
| WO 2018/074584 A1 | 26 April 2018 | US 2020/0199476 A1 example 1, comparative example 1, claims | |
| | | CN 109844076 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017179687 A